# EUROPÄISCHE PATENTSCHRIFT

(11) **EP 4 076 824 B1**
(45) Veröffentlichungstag und Bekanntmachung des Hinweises auf die Patenterteilung: **03.07.2024**
(21) Anmeldenummer: 20838404.0
(22) Anmeldetag: 17.12.2020
(51) Int. Cl.: B23K 26/00, B23K 26/08, B23K 26/12, B23K 26/16, B23K 26/34, F16D 65/12, B23K 101/00

(54) **VORRICHTUNG ZUR BESCHICHTUNG VON BREMSSCHEIBEN, UND FERTIGUNGSANLAGE ZUR HERSTELLUNG VON BREMSSCHEIBEN, MIT ZUMINDEST EINER SOLCHEN VORRICHTUNG**
DEVICE FOR COATING BRAKE DISCS, AND PRODUCTION FACILITY FOR PRODUCING BRAKE DISCS, COMPRISING AT LEAST ONE SUCH DEVICE
DISPOSITIF DE REVÊTEMENT DE DISQUES DE FREIN, ET INSTALLATION DE FABRICATION POUR LA RÉALISATION DE DISQUES DE FREIN, COMPRENANT UN TEL DISPOSITIF

(30) Priorität: 17.12.2019 DE 102019134812
(43) Veröffentlichungstag der Anmeldung: 26.10.2022
(73) Patentinhaber: CHIRON Group SE, 78532 Tuttlingen (DE)
(72) Erfinder: KOSCSÁK, Géza, 73278 Schlierbach (DE); BABEL, Stefan, 73278 Schlierbach (DE); BOI, Axel, 78183 Huefingen (DE)
(74) Vertreter: Witte, Weller & Partner Patentanwälte mbB
(86) Internationale Anmeldenummer: PCT/EP2020/086710
(87) Internationale Veröffentlichungsnummer: WO 2021/122951

(56) Entgegenhaltungen:
- DE-A1-102016 212 082
- JP-A- 2018 069 266
- US-A1- 2018 180 125

## Beschreibung

Die vorliegende Offenbarung bezieht sich auf eine Vorrichtung zur Beschichtung von Bremsscheiben, insbesondere mittels Laserauftragsschweißen, und eine Fertigungsanlage zur Herstellung von Bremsscheiben, mit zumindest einer solchen Vorrichtung, siehe Ansprüche 1 und 15.

Die US 2018/0180125 A1 (beschreibend alle Merkmale des Oberbegriffes des Anspruchs 1) offenbart ein Verfahren zur Herstellung einer Bremsscheibe, umfassend Zuführen eines Pulvers durch eine Düse und aus der Düse über einen Düsenauslass in Richtung eines Substrats, und Erzeugung eines Laserstrahls durch die Düse, um das Pulvers und/oder Substrat zu erhitzen, um das Substrat mit dem Pulver zu beschichten, wobei das Verfahren eine Metallbeschichtung auf einer Oberfläche der Bremsscheibe erzeugt. Die US 2018/0180125 A1 offenbart ferner eine einschlägige Anlage.

Die DE 10 2016 212 082 A1 offenbart eine Vorrichtung zum selektiven Laserschmelzen mit einer Prozesskammer, die von einem Gehäuse umgeben ist, einer in der Prozesskammer angeordneten Bauplatte, wobei auf der Bauplatte ein Gegenstand schichtweise aufgebaut wird, zumindest einem Schutzgaseinlass, durch den Schutzgas im Wesentlichen parallel zur Bauplatte in die Prozesskammer einströmt, und zumindest einer Absaugvorrichtung, durch die beim Laserschweißen entstehende Prozessprodukte abgesaugt werden. Mehrere Schutzgaseinlässe sind um die Bauplatte herum auf einer ersten Höhe relativ zur Bauplatte angeordnet oder ein einzelner die Bauplatte umgebender Schutzgaseinlass ist vorgesehen.

Die JP 2018 069 266 A offenbart ein Verfahren und eine Vorrichtung zur Laserbeschichtung (Laser Cladding) eines Ventilsitzes. Die Vorrichtung weist eine Baukammer auf, an die zwei Absaugleitungen angekoppelt sind, die in einen gemeinsamen Pulversammler münden, wobei eine Absaugleitung vor dem Ventilsitz und eine andere Absaugleitung nach dem Ventilsitz angekoppelt ist, und wobei die Strömungsgeschwindigkeit in den Absaugleitungen unterschiedlich ist.

Die Beschichtung von Bremsscheiben kann beispielsweise unter Nutzung des sogenannten EHLA-Verfahrens (extremes Hochgeschwindigkeits-Laserauftragsschweißverfahren) erfolgen. Allgemein bezieht sich die vorliegende Offenbarung auf einen thermisch induzierten Auftrag auf ein Substrat. Dies umfasst in anderen Ausgestaltungen auch einen Auftrag mittels Flammspritzen.

Zumindest in beispielhaften Ausgestaltungen bezieht sich die vorliegende Offenbarung auf das Beschichten von Bremsscheiben unter Nutzung des Laserauftragsschweißens, insbesondere unter Nutzung von Hochleistungs-Laserauftragsschweißverfahren.

Bremsscheiben sind wesentliche Bestandteile des Bremssystems von Fahrzeugen und ähnlichen technischen Einrichtungen. Bremsscheiben müssen geeignete Reibflächen für Bremsbeläge bereitstellen, beim Bremsvorgang hohe Kräfte und Momente aufnehmen, und im Betrieb auch bei hoher Belastung thermisch stabil sein. Eine weitere Anforderung ist die Verschleißbeständigkeit.

Bremsscheiben konventioneller Bauart sind beispielsweise aus Grauguss gefertigt. Ferner sind insbesondere im Hochleistungsbereich Bremsscheiben aus Keramikwerkstoffen bekannt. Grauguss-Bremsscheiben stoßen insbesondere hinsichtlich thermischer Stabilität sowie Verschleißverhalten an gewisse Grenzen. Bremsscheiben aus Keramikwerkstoffen sind sehr teuer.

Daneben ist es bekannt, Bremsscheiben mit einem metallischen Grundkörper mit geeigneten Verschleißschichten zu versehen. Damit können im Idealfall Vorteile von metallischen Bremsscheiben und von keramischen Bremsscheiben miteinander kombiniert werden. Derartige Bremsscheiben können auch als beschichtete Bremsscheiben bezeichnet werden.

Beispielsweise offenbart die DE 10 2009 008 105 A1 eine Bremsscheibe für ein Fahrzeug sowie ein Verfahren zu deren Herstellung, wobei die Bremsscheibe an ihren Reibflächen eine Beschichtung aufweist, die Hartstoffe aus Karbiden oder einer Oxidkeramik umfasst. Die Beschichtung aus Karbiden, Keramik, Cermet und/oder Metallen wird mittels Flammspritzen, Plasmaspritzen, Kaltgasspritzen oder Lichtbogendrahtspritzen auf einen metallischen Grundkörper aufgebracht.

Aus der DE 10 2011 100 456 A1 ist ein Laserauftragsschweißverfahren bekannt, welches zum Aufbringen von Verschleißschutzschichten und/oder Korrosionsschutzschichten auf einen Grundkörper mit hoher Auftragsleistung ausgebildet ist. Das Verfahren nutzt pulverförmiges Material, das einem Bauteil zugeführt wird und mittels thermischer Energie, die durch einen Laser erzeugt und eingebracht wird, geschmolzen und mit dem Bauteil verbunden wird.

Aus der DE 10 2016 200 951 A1 ist ein Verfahren zum Erzeugen einer Beschichtung auf einer Reibfläche eines Bremskörpers bekannt. Das Verfahren umfasst die Bereitstellung eines Bremskörpers aus einem Basismaterial, wobei eine spätere Reibfläche des Bremskörpers definiert aufgeraut wird, um eine gewünschte Oberflächenstruktur zu erzeugen. Die Reibfläche wird erwärmt. Anschließen wird mittels eines thermischen Spritzverfahrens eine Beschichtung auf die erwärmte Reibfläche aufgebracht, wobei die Beschichtung verschleißfest bzw. korrosionsfest sein soll.

Verfahrensbedingt gibt es bei diversen Ansätzen zur Beschichtung von Bremsscheiben überschüssiges Material, das nicht mit dem Grundkörper/Substrat gefügt wird. Dieser Überschuss kann auch als Overspray bezeichnet werden. Das Overspray verschmutzt die Fertigungsanlage. Das Overspray liegt häufig in kleinen Partikeln (Pulver) vor, so dass für Anlagenbediener und sonstiges Personal eine Schutzausrüstung erforderlich sein kann.

Bislang werden beschichtete Bremsscheiben mit thermisch aufgebrachten Verschleißschutzschichten und/oder Korrosionsschutzschichten noch nicht in Großserie verbaut. Eine Ursache liegt darin, dass die Herstellung solcher Bremsscheiben noch recht aufwendig ist. Insbesondere gibt es einen Bedarf an serientauglichen und/oder massentauglichen Prozessen und Anlagen.

Aus der DE 10 2017 215 911 A1 ist eine Anlage zur additiven Fertigung bekannt, insbesondere mittels Auftragsschweißen. Die Anlage weist eine Absaugeinrichtung auf, die einerseits eine im Arbeitsraum wirksame Einheit und andererseits eine in einer Pulverkammer wirksame Einheit aufweist. Die Absaugleistung der Absaugeinrichtung kann über Stellglieder und ähnliche Mittel eingestellt werden. Aus der DE 195 33 960 C2 ist eine Anlage zur additiven Fertigung bekannt, die eine Absaughaube aufweist, die einen Rahmen umfasst, der eine Kühlplatte umgibt. Es ist eine einstufige Absaugung vorgesehen, die im Bodenbereich des Arbeitsraums wirksam ist. Aus der DE 10 2018 206 358 A1 ist eine Anlage zur additiven Fertigung bekannt, die eine Reinigungsvorrichtung aufweist, die schlauchartige Leitungen umfasst, die zum Blasen oder zum Saugen ausgebildet sind.

Vor diesem Hintergrund liegt der vorliegenden Offenbarung die Aufgabe zugrunde, eine Vorrichtung sowie ein Verfahren zur Beschichtung von Bremsscheiben mit verbesserter Serientauglichkeit anzugeben. Insbesondere soll die Herstellung von beschichteten Bremsscheiben im industriellen Umfeld vereinfacht werden. Dies umfasst beispielsweise eine zumindest teilautomatisierte oder hochautomatisierte Beschichtung. Die Vorrichtung soll möglichst ressourceneffizient und ohne große Belastungen für den Bediener betreibbar sein, insbesondere in Bezug auf überschüssiges Beschichtungsmaterial. Nach Möglichkeit soll bereits in einem Bauraum der Vorrichtung ein Großteil des überschüssigen Beschichtungsmaterials aufgefangen werden. Gleichwohl sollen das Verfahren und/oder die Vorrichtung eine Beschichtung mit hoher Aufbaurate/Auftragsraten ermöglichen, so dass die Vorrichtung insgesamt eine möglichst kurze Fertigungszeit pro Bauteil erreicht.

Gemäß einem ersten Aspekt der vorliegenden Erfindung wird die Aufgabe durch eine Vorrichtung zur Beschichtung von Bremsscheiben, insbesondere mittels Laserauftragsschweißen, entsprechend Anspruch 1 gelöst, die Folgendes aufweist:
- eine Basis mit einem Gehäuse, das einen Arbeitsraum bildet,
- einen Werkstückträger im Arbeitsraum, wobei der Werkstückträger zur Aufnahme eines Grundkörpers einer Bremsscheibe ausgebildet ist,
- einen Beschichtungskopf, der zur Erzeugung einer Beschichtung auf dem Grundkörper ausgebildet ist, insbesondere durch thermisch induzierten Auftrag eines Pulverwerkstoffs,
- eine Handhabungseinrichtung, die Relativbewegungen zwischen dem Werkstückträger und dem Beschichtungskopf erzeugt, und
- eine Absaugeinrichtung zur Absaugung überschüssigen Materials aus dem Arbeitsraum, wobei die Absaugung mehrstufig erfolgt und zumindest zwei Absaugstufen aufweist,

wobei eine erste Absaugeinheit für eine erste der Absaugstufen vorgesehen ist, die eine vertikal ausgerichtete Strömung im Arbeitsraum erzeugt,
wobei eine zweite Absaugeinheit für eine zweite der Absaugstufen vorgesehen ist, und
wobei die zweite Absaugeinheit einen Kragen umfasst, der einem Umfangsabschnitt des Grundkörpers zugeordnet ist, mit einer Saugleitung verbunden ist und überschüssiges Material vom Umfangsabschnitt absaugt.

Die Aufgabe der Erfindung wird auf diese Weise vollkommen gelöst.

Erfindungsgemäß erlaubt nämlich die Absaugeinrichtung eine weitreichende Absaugung überschüssigen Materials. Das überschüssige Material, insbesondere das Restpulver, wird bereits im Arbeitsraum nahezu vollständig oder vollständig abgesaugt. Mit anderen Worten ist die beschichtete Bremsscheibe - je nach Geometrie und/oder Beschaffenheit der Oberfläche der Bremsscheibe - vollständig oder nahezu vollständig vom Restpulver befreit, wenn die Bremsscheibe aus dem Arbeitsraum entnommen wird. Auf diese Weise sinkt der bauliche Aufwand für nachgeordnete Stationen und Förderstrecken. Dies bezieht sich beispielsweise auf etwaige weitere Reinigungseinrichtungen und Absaugeinrichtung, die die Bremsscheibe außerhalb des Arbeitsraums behandeln. Es können ferner auch Maßnahmen zur Abdichtung und zum Schutz der Umgebung betroffen sein, auch hier verringert sich der Aufwand.

Im Sinne der vorliegenden Offenbarung bezieht sich der Begriff mehrstufige Absaugung nicht unbedingt auf zeitlich aufeinanderfolgende Stufen. Stattdessen bezieht sich der Begriff mehrstufige Absaugung insbesondere auf eine Ausgestaltung mit zwei oder mehr Absaugeinheiten, die in unterschiedlicher Weise auf die Bremsscheibe einwirken. Es versteht sich, dass auch diese zwei oder mehr Absaugeinheiten zeitlich versetzt auf die Bremsscheibe einwirken können. In beispielhaften Ausgestaltungen wirken die zwei oder mehr Absaugeinheiten zumindest zeitweise (zeitlich) parallel auf die Bremsscheibe ein. Die Absaugeinrichtung ist zur mehrstufigen Absaugung im Arbeitsraum befähigt. Der Arbeitsraum ist in beispielhaften Ausgestaltungen ein nach außen hinreichend abgegrenzter oder abgrenzbarer Raum, in dem der Materialauftrag erfolgt und der in diesem Zusammenhang einem gewissen Verschmutzungseintrag ausgesetzt ist.

Im Rahmen der vorliegenden Offenbarung ist unter einer mehrstufigen Absaugung eine Absaugung im Arbeitsraum mit zwei oder mehr Absaugeinheiten zu verstehen. Die Absaugeinheiten sind in beispielhaften Ausgestaltungen bewusst unterschiedlich gestaltet, beispielsweise hinsichtlich der räumlichen Anordnung und/oder der räumlichen/zeitlichen Einwirkung auf den Arbeitsraum bzw. darin angeordnete Werkstücke (beispielsweise Bremsscheiben). Die zwei oder mehr Absaugeinheiten sind dem Arbeitsraum zugeordnet, so dass die Absaugung im Arbeitsraum erfolgt. Die zwei oder mehr Absaugeinheiten können zumindest teilweise im Arbeitsraum angeordnet sein. In einer beispielhaften Ausgestaltung ist die Vorrichtung als Bremsscheibenbeschichtungsvorrichtung gestaltet, also als Einzweck-Maschine. Im Rahmen der vorliegenden Offenbarung ist unter einer mehrstufigen Absaugung nicht zu verstehen, dass nur eine einzige Absaugeinheit vorgesehen ist, die mit unterschiedlichen Intensitäten/Leistungsniveaus betreibbar ist.

Im Sinne der vorliegenden Offenbarung handelt es sich bei einem thermisch induzierten Auftrag um eine Beschichtung, die mittels Flammspritzen und/oder Laserauftragsschweißen auf den Grundkörper aufgebracht ist. Beispielhafte Ausgestaltungen der vorliegenden Offenbarung beziehen sich auf das Beschichten durch Laserauftragsschweißen, insbesondere durch Hochleistungs-Laserauftragsschweißen, beispielsweise mittels EHLA.

Der Grundkörper kann auch als Substrat, Halbzeug, Werkstückgrundkörper oder Werkstück bezeichnet werden. Bei dem Grundkörper handelt es sich in beispielhaften Ausgestaltungen um einen metallischen Grundkörper, beispielsweise um einen Grundkörper aus Grauguss. Die Beschichtung ist beispielsweise als verschleißhemmende Beschichtung und/oder Korrosionsschutzbeschichtung ausgestaltet. Denkbar ist eine Beschichtung mit keramischen Werkstoffen, Karbiden, und ähnlichen Werkstoffen. In diesem Zusammenhang wird auch auf den eingangs genannten Stand der Technik verwiesen.

Insgesamt entsteht somit ein inhomogenes Bauteil, da unterschiedliche Werkstoffe für den Grundkörper und für die Beschichtung verwendet werden. Das Bauteil kann besser an die erwarteten Einsatzbedingungen angepasst werden.

In beispielhaften Ausgestaltungen lässt sich ein Reinigungsgrad erzielen, der die potentielle Belastung für den Bediener derart reduziert, dass die Vorrichtung mit persönlicher Schutzausrüstung mit einer geringeren Schutzklasse bedient werden kann. In beispielhaften Ausgestaltungen lässt sich ein Reinigungsgrad erzielen, der eine Bedienung der Vorrichtung ohne spezielle persönliche Schutzausrüstung (Staubschutz) ermöglicht.

Im Sinne der vorliegenden Offenbarung ist eine Absaugeinheit eine Einheit, die ein Druckgefälle und eine hierdurch induzierte Fluidströmung nutzt, um überschüssiges Material aus dem Bauraum abzuführen. Das überschüssige Material liegt üblicherweise als Pulver oder Pulvergemisch vor. Die Fluidströmung kann durch Anlegen eines Unterdrucks erzeugt werden (saugen). In beispielhaften Ausgestaltungen ist die Fluidströmung eine Gasströmung, wobei Partikel (Pulver) enthalten sein können. In beispielhaften Ausgestaltungen besteht die Fluidströmung zu einem Großteil (größer 50 % oder gar größer 80 %) aus Luft. Andere Fluide und Gasgemische sind grundsätzlich denkbar.

Gemäß einer beispielhaften Ausführungsform erfolgt die Absaugung zweistufig oder dreistufig. Es hat sich gezeigt, dass eine mehrstufige Absaugung mit verschiedenen Absaugeinheiten dazu beitragen kann, das gewünschte Absaugniveau/Reinigungsniveau zu erreichen. Die Absaugeinrichtung kann folglich mehrere Absaugeinheiten umfassen. Zumindest in beispielhaften Ausgestaltungen handelt es sich um Absaugeinheiten verschiedener Bauart. Mit anderen Worten werden unterschiedliche Typen von Absaugeinheiten verwendet, zumindest in beispielhaften Ausgestaltungen.

Für die erste der Absaugstufen ist eine erste Absaugeinheit vorgesehen, die eine vertikal ausgerichtete Strömung im Arbeitsraum erzeugt, insbesondere eine stetige Strömung. In einer beispielhaften Ausgestaltung ist die erste Absaugeinheit als stetige Absaugeinheit gestaltet. Eine solche Absaugeinheit ist dauerhaft aktiv, wenn die Vorrichtung betrieben wird.

Im Rahmen der vorliegenden Offenbarung sind Begriffe wie erste Absaugeinheit, zweite Absaugeinheit, dritte Absaugeinheit und dergleichen nicht zwingend als qualitative oder quantitative Wertung zu verstehen. Mit anderen Worten geht es primär um eine Unterscheidung zwischen verschiedenen Einheiten und Elementen.

In einer beispielhaften Ausgestaltung ist die erste Absaugeinheit aktiv, wenn der Grundkörper beschichtet wird. Die erste Absaugeinheit reinigt die allgemeine Prozessatmosphäre im Arbeitsraum. Beispielweise geht es um solche Partikel, die nicht von anderen, lokalen Absaugeinheiten erfasst werden. Die erste Absaugeinheit kann auch als globale Absaugeinheit bezeichnet werden, zumindest in beispielhaften Ausgestaltungen.

Gemäß einer weiteren beispielhaften Ausgestaltung erzeugt die erste Absaugeinheit eine nach unten gerichtete Strömung im Arbeitsraum, die den am Werkstückträger aufgenommenen Grundkörper umströmt. Auf diese Weise kann die Gravitation für die Reinigung und Absaugung genutzt werden. Eine beispielhafte Ausgestaltung umfasst einen Einlass im oberen Bereich des Arbeitsraums und einen Auslass im unteren Bereich des Arbeitsraums.

In einer beispielhaften Ausgestaltung ist die von der ersten Absaugeinheit erzeugte Strömung eine stetige, laminare Strömung, zumindest eine im Wesentlichen laminare Strömung. Es versteht sich, dass eine ideal laminare Strömung in der Praxis allenfalls unter Laborbedingungen erzeugbar ist. Gleichwohl wird in beispielhaften Ausgestaltungen ein laminarer Zustand angestrebt, um Verwirbelungen und Ähnliches zu vermeiden. Die erste Absaugeinheit erzeugt eine Strömung mit moderater Strömungsgeschwindigkeit, aber mit hohem Volumenstrom, zumindest in beispielhaften Ausführungsformen.

In einer weiteren beispielhaften Ausgestaltung ist der Arbeitsraum derart gestaltet, dass möglichst wenige Flächen im Arbeitsraum horizontal orientiert sind, also quer zur Strömungsrichtung der Strömung der ersten Absaugeinheit. Auf diese Weise können Pulverablagerungen und ähnliche Anhäufungen schon konstruktiv minimiert werden. Ferner werden durch diese Gestaltung Strömungswiderstände verringert.

In einer weiteren beispielhaften Ausgestaltung erzeugt die erste Absaugeinheit eine gerichtete Strömung durch den Arbeitsraum hindurch, wobei ein horizontaler Strömungsquerschnitt der gerichteten Strömung mindestens 50 %, vorzugsweise mindestens 80 % des horizontalen Querschnitts des Arbeitsraums abdeckt. Mit anderen Worten wird in dieser Ausführungsform angestrebt, einen Großteil des genutzten Arbeitsraums mit der durch die erste Absaugeinheit erzeugten Strömung zu durchströmen. Auf diese Weise kann der Arbeitsraum großflächig gereinigt und vom Restpulver befreit werden.

Für die zweite der Absaugstufen ist eine zweite Absaugeinheit vorgesehen, wobei die zweite Absaugeinheit einen Kragen umfasst, der einem Umfangsabschnitt des Grundkörpers zugeordnet ist und dort insbesondere überschüssiges Material absaugt.

Damit kann die zweite Absaugeinheit eine lokale Strömung erzeugen, die einen Großteil des überschüssigen Materials unmittelbar beim Auftragen, bzw. in engem zeitlichen Zusammenhang dazu, absaugt. Beispielhaft ist die zweite Absaugeinheit ähnlich einem Schutzblech gestaltet, das ein Rad zumindest teilweise abdeckt.

In einer beispielhaften Ausgestaltung hat der Kragen einen etwa G-förmigen Querschnitt, der sich entlang einer gekrümmten Bahn oder Kreisbahn um den Umfang des Grundkörpers in einem Abstand zum Umfang erstreckt. Mit anderen Worten ist der Querschnitt in dieser Ausführungsform leicht spiralförmig gestaltet. Die Öffnung des "G" ist dem Umfang des Grundkörpers zugewandt. Die Öffnung ist auf einer Höhe (bezogen auf die axiale Erstreckung des Grundkörpers) angeordnet, in der sich bei der Beschichtung überschüssiges Material (Overspray) sammelt. In einer weiteren beispielhaften Ausgestaltung hat der Kragen einen etwa U-förmigen Querschnitt, wobei die Öffnung des "U" dem Umfang des Grundkörpers zugewandt ist.

In einer beispielhaften Ausgestaltung ist das Profil des Kragens entlang einer Kreisbahn extrudiert, wobei eine Öffnung des Profils radial nach innen gerichtet ist, um überschüssiges Beschichtungsmaterial aufzunehmen. Es kann sich um eine Kreisabschnittsbahn handeln. In anderen Ausgestaltungen handelt es sich um eine vollständig umlaufende Kreisbahn, so dass der Kragen als Ring gestaltet ist.

Der Kragen der zweiten Absaugeinheit ist mit einer Saugleitung verbunden. Über die Saugleitung kann überschüssiges Material vom Umfangsabschnitt abgesaugt werden. Mit anderen Worten nutzt die zweite Absaugeinheit eine separate Senke für überschüssiges Beschichtungsmaterial. Auf diese Weise kann mit Hilfe der zweiten Absaugeinheit gezielt ein lokal begrenzter Bereich abgesaugt werden. Hierfür kann ein hoher Unterdruck angelegt werden. Der von der zweiten Absaugeinheit Unterdruck ist (betragsmäßig) höher als der von der globalen, ersten Absaugeinheit genutzte Unterdruck, zumindest in beispielhaften Ausgestaltungen.

In beispielhaften Ausgestaltungen ist die zweite Absaugeinheit dazu ausgebildet, einen Großteil des Overspray unmittelbar nach dem Ausbringen des Pulvers durch den Beschichtungskopf aufzufangen und abzuführen.

In einer weiteren beispielhaften Ausführungsform nutzt die zweite Absaugeinheit mit dem dortigen Kragen die durch die erste Absaugeinheit erzeugte Strömung. Mit anderen Worten erfolgt die Absaugung mittelbar über die Strömung der ersten Absaugeinheit. Demgemäß braucht die zweite Absaugeinheit gemäß dieser Ausgestaltung keinen eigenen Sauganschluss.

In weiteren beispielhaften Ausgestaltungen erfolgt die Absaugung fliehkraftunterstützt, insbesondere die Absaugung durch die zweite Absaugeinheit. Durch die Rotation des Grundkörpers wird die kinetische Energie der Pulverpartikel des Overspray deutlich erhöht. Diese Partikel werden nach außen in Richtung auf den Kragen der zweiten Absaugeinheit geschleudert. Der Kragen der zweiten Absaugeinheit trägt dazu bei, dass die Partikel umgelenkt werden, sodass diese schlussendlich über die erste Absaugeinheit abgesaugt werden. Diese Gestaltung kann mit einem vollständig umlaufenden, ringartig gestalteten Kragen kombiniert werden. Auf diese Weise wird sichergestellt, dass über den gesamten Umfang des Grundkörpers weggeschleudertes Material größtenteils aufgefangen wird.

Gemäß einer weiteren beispielhaften Ausgestaltung ist der Kragen der zweiten Absaugeinheit definiert vom Umfang des Grundkörpers beabstandet ist. Es ist grundsätzlich auch vorstellbar, mit dem Kragen den Umfang des Grundkörpers zumindest abschnittsweise zu überlappen, zumindest in beispielhaften Ausgestaltungen.

Gemäß einer weiteren beispielhaften Ausgestaltung deckt der Kragen der zweiten Absaugeinheit einen Umfangsabschnitt von mindestens 120°, vorzugsweise von mindestens 150°, weiter bevorzugt von mindestens 180° ab. Auf diese Weise kann die zweite Absaugeinheit auf einen beträchtlichen Teil des Grundkörpers einwirken. Dies erhöht die Absaugleistung der zweiten Absaugeinheit. Es ist auch vorstellbar, in beispielhaften Ausgestaltungen, den Kragen vollständig umlaufen zu lassen. Demgemäß kann der Kragen ringartig oder ringabschnittsförmig gestaltet sein. Es sind auch Gestaltungen denkbar, bei denen der Kragen der zweiten Absaugeinheit den Umfang des Grundkörpers vollständig umgibt oder umschließt. Demgemäß deckt ein solcher Kragen 360° ab, zumindest in beispielhaften Ausgestaltungen.

Gemäß einer weiteren beispielhaften Ausgestaltung ist der Kragen der zweiten Absaugeinheit derart gestaltet und angeordnet, dass die zweite Absaugeinheit während des Materialauftrags, bei aktivem Beschichtungskopf, zur Absaugung auf den Grundkörper einwirken kann. Mit anderen Worten ist der Kragen beispielsweise in räumlicher Nähe zum Beschichtungskopf, insbesondere zu dessen Auftragsdüse, angeordnet.

Gemäß einer weiteren beispielhaften Ausgestaltung ist der Kragen der zweiten Absaugeinheit derart gestaltet und angeordnet, dass bei einem sich drehenden Grundkörper ein Abschnitt, der vom Beschichtungskopf beschichtet wurde, nach dem Beschichten, vorzugsweise unmittelbar nach dem Beschichten, des Abschnitts in einen Wirkbereich des Kragens eintritt.

Dies lässt sich beispielsweise dadurch bewirken, dass ein Eintrittsbereich (ein erstes Ende) des Kragens einem Wirkbereich des Beschichtungskopfes benachbart ist, wobei der Eintrittsbereich des Kragens vom Wirkbereich des Beschichtungskopfes in der gegebenen Drehrichtung des Grundkörpers versetzt ist. Mit anderen Worten fährt der vom Beschichtungskopf behandelte Abschnitt bei der weiteren Drehung des Grundkörpers in den Eintrittsbereich und folglich den Kragen hinein.

Wenn der Grundkörper mit hoher Rotationsgeschwindigkeit rotiert wird, können sich Fliehkräfte ergeben, die dazu beitragen, das überschüssige Beschichtungsmaterial radial nach außen zu tragen und dem Kragen zuzuführen.

Gemäß einer weiteren beispielhaften Ausgestaltung ist die zweite Absaugeinheit zumindest dann aktiviert, wenn der Beschichtungskopf aktiv ist. Dies hat die Wirkung, dass ein Großteil des überschüssigen (nicht mit dem Grundkörper verbundenen) Beschichtungsmaterials von der zweiten Absaugeinheit aufgenommen werden kann.

In einem Ausführungsbeispiel ist die zweite Absaugeinheit zumindest dann aktiv, wenn die Materialzufuhr (Pulverzufuhr) des Beschichtungskopfes aktiv ist. Es ist auch vorstellbar, die zweite Absaugeinheit stetig zu betreiben, also auch dann, wenn der Beschichtungskopf nicht unmittelbar aktiv ist.

Gemäß einer weiteren beispielhaften Ausgestaltung ist eine dritte Absaugeinheit für eine dritte der Absaugstufen vorgesehen, wobei die dritte Absaugeinheit dazu ausgebildet ist, überschüssiges Material aus einem Zentrum, insbesondere aus einem Nabenbereich, des Grundkörpers abzusaugen.

Bremsscheiben weisen üblicherweise auf der Vorderseite und der Rückseite jeweils eine Reibfläche auf, die als Kreisring einen Nabenbereich umgibt. Der Nabenbereich umfasst beispielsweise einen Aufnahmebund und/oder eine Zentrierung. Ferner sind im Nabenbereich Befestigungslöcher vorgesehen, welche die Zentrierung umgeben, zumindest in beispielhaften Ausgestaltungen.

Im Rahmen der vorliegenden Offenbarung ist die Vorderseite des Grundkörpers diejenige Seite, die vom Fahrzeug weg zeigt, wenn die Bremsscheibe montiert ist. Demgemäß ist die Rückseite diejenige Seite, die zum Fahrzeug zeigt. Dies dient nur zur Veranschaulichung und ist nicht einschränkend zu verstehen.

Bremsscheiben sind häufig nicht streng als flache Scheibe gestaltet. Bremsscheiben sind üblicherweise flanschartig gestaltet. Demgemäß ist regelmäßig auch der Grundkörper als flanschförmiges Teil gestaltet. Der Nabenbereich ist regelmäßig als topfartige Kontur im Zentrum der Bremsscheibe ausgebildet. Mit anderen Worten ist der Nabenbereich als Erhebung oder Vertiefung gestaltet, je nach betrachteter Seite des Grundkörpers.

Im Nabenbereich weisen Bremsscheiben daher häufig Kanten und Kehlen auf. Eine Hohlkehle ist eine Innenkante. Daneben können auch Außenkanten vorgesehen sein. Selbst dann, wenn Fasen oder Rundungen vorgesehen sind, so gibt es zuweilen Ansammlungen von Beschichtungsmaterial in Kanten/Hohlkehlen/Vertiefungen im Nabenbereich, und/oder benachbart hierzu.

Daher ist in beispielhaften Ausgestaltungen eine dritte Absaugeinheit vorgesehen, die an einen Bereich des Grundkörpers angepasst ist, insbesondere in dessen Zentrum, in dem Anhäufungen des Beschichtungsmaterials zu erwarten sind.

In einer beispielhaften Ausgestaltung weist die dritte Absaugeinheit einen Antrieb auf, der die dritte Absaugeinheit zwischen einer Arbeitsstellung und einer Ausweichstellung bewegt. Auf diese Weise kann die Absaugeinheit, insbesondere ein Saugstück der Absaugeinheit, in eine Parkposition überführt werden, wenn das Werkstück gewechselt wird. Beispielhaft ist der Antrieb als Schwenkantrieb ausgestaltet, der ein Saugstück der dritten Absaugeinheit radial in Richtung auf ein Zentrum des Grundkörpers einschwenken kann. Das Saugstück kann auch als Saugrüssel bezeichnet werden.

Gemäß einer weiteren beispielhaften Ausgestaltung ist die dritte Absaugeinheit mit einer Absaugleitung verbunden. Mit anderen Worten nutzt die dritte Absaugeinheit eine separate Senke für überschüssiges Beschichtungsmaterial. Damit kann die dritte Absaugeinheit lokal begrenzt einen hohen Unterdruck nutzen.

Gemäß beispielhaften Ausgestaltungen umfasst die Absaugeinrichtung sowohl die erste Absaugeinheit, als auch die zweite Absaugeinheit und die dritte Absaugeinheit. Auf diese Weise kann eine dreistufige Absaugung erfolgen. Es ist jedoch auch vorstellbar, zumindest in beispielhaften Ausführungsformen, zwei der drei hierin beschriebenen Absaugeinheiten miteinander zu kombinieren, um eine mehrstufige (zweistufige) Absaugung zu erzielen. Es ist grundsätzlich vorstellbar, die zweite und die dritte Absaugeinheit mit einer weiteren, andersartig gestalteten, globalen Absaugeinheit, zu kombinieren. Es ist auch vorstellbar, die erste und die zweite Absaugeinheit miteinander zu kombinieren, und auf die dritte Absaugeinheit zu verzichten, zumindest in beispielhaften Ausgestaltungen.

Gemäß einer weiteren beispielhaften Ausführungsform umfasst der Werkstückträger eine Drehachse für den Grundkörper. Die Drehachse kann als Drehspindel oder Drehtisch gestaltet sein. Auf diese Weise kann der Grundkörper um seine Längsachse rotiert werden.

Gemäß einer weiteren beispielhaften Ausführungsform umfasst die Vorrichtung eine Wendeeinheit für den Grundkörper. Auf diese Weise kann der Grundkörper gewendet werden. Dies umfasst beispielsweise eine Rotation um 180° um eine zur Längsachse des Grundkörpers senkrechte Achse. Wenn eine Wendeeinheit verbaut oder zugeordnet ist, kann die Vorrichtung beide Seiten beschichten.

In diesem Zusammenhang ist es von Vorteil, zumindest in beispielhaften Ausgestaltung, wenn zumindest die zweite Absaugeinheit oder die dritte Absaugeinheit derart gestaltet sind, dass genügend Platz für das Wenden des Werkstücks vorhanden ist. Dies kann einerseits durch die geometrische Gestaltung erreicht werden, insbesondere bei der zweiten Absaugeinheit. Alternativ oder zusätzlich kann die Absaugeinheit (bzw. Elemente davon) beweglich gestaltet sein, um genügend Platz für das Wenden des Werkstücks bereitzustellen, vergleiche die dritte Absaugeinheit.

Die Wendeeinheit ist vorzugsweise dazu ausgebildet, den Grundkörper automatisiert um 180° zu drehen, so dass beide Frontalseiten (Vorderseite und Rückseite) automatisiert beschichtet werden können. In einer beispielhaften Ausgestaltung ist die Wendeeinheit ferner dazu ausgebildet, den Grundkörper vom Werkstückträger abzuheben und mit gedrehte Orientierung auf dem Werkstückträger abzulegen.

Die Wendeeinheit kann als separate Wendeeinheit (beispielsweise als Einzweck-Manipulator) bei der Vorrichtung ausgebildet sein. Es ist jedoch auch vorstellbar, einen Manipulator zu verwenden, der ohnehin für den Werkstückwechsel oder Werkstücktransfer vorgesehen ist. Ein solcher Manipulator ist beispielhaft als Roboter gestaltet, insbesondere als Gelenkarmroboter. Der Manipulator weist einen Greifer auf, um das Werkstück (die Bremsscheibe) zu greifen. Demgemäß können entsprechende Freiheitsgrade vorhanden sein, um das Werkstück in gewünschter Weise zu wenden.

Gemäß einer weiteren beispielhaften Ausgestaltung umfasst die Vorrichtung ferner eine Filtereinheit zur Abscheidung des pulverförmigen Beschichtungsmaterials aus dem abgesaugten Fluid/Gas. Auf diese Weise kann wertvolles Beschichtungsmaterial isoliert werden. Im Idealfall kann dieses Beschichtungsmaterial wiederverwendet werden.

Beispielhaft erfolgt eine zweistufige Filterung des pulverförmigen Beschichtungsmaterials. Eine erste Stufe kann eine Grobfilterung umfassen. Eine zweite Stufe kann eine Feinfilterung umfassen. Die erste Stufe filtert einen hohen Massenanteil des Pulvers aus der Abluft heraus. Das in der ersten Stufe gewonnene Pulver kann recycelt werden, andernfalls ist eine geregelte Entsorgung möglich. Die zweite Stufe dient beispielsweise zur Filterung und Absonderung von feinsten Partikeln, mithin von Feinstaub. Beispielsweise ist der Reinigungsgrad der Abluft nach der ersten Filterstufe und der zweiten Filterstufe so hoch, dass die resultierende Abluft an die Umgebung abgegeben werden kann.

Ein weiterer Aspekt der vorliegenden Erfindung bezieht sich auf eine Fertigungsanlage zur Herstellung von Bremsscheiben, siehe Anspruch 15.

In einer beispielhaften Ausgestaltung weist die Fertigungsanlage ferner eine Transfereinrichtung auf, die Werkstücke zwischen Bearbeitungsstationen transferiert. Auf diese Weise kann eine teilautomatisierte oder hochautomatisierte Fertigung realisiert werden. In beispielhaften Ausgestaltungen ist eine Handhabungseinrichtung für den Werkstückwechsel vorgesehen, die Werkstücke zwischen der Beschichtungsvorrichtung und der Transfereinrichtung übergeben kann, wobei die Handhabungseinrichtung ferner dazu ausgebildet ist, das Werkstück (den Grundkörper) zu wenden.

Die Vorrichtung kann Bestandteil einer Fertigungsanlage zur Herstellung von Bremsscheiben sein. Die Fertigungsanlage kann beispielhaft neben der Beschichtungsvorrichtung Schleifstationen, Drehstationen, Bohrstationen und Ähnliches zur Erzeugung der gewünschten Endgestalt der Bremsscheibe aufweisen. Üblicherweise werden die Reibflächen der Bremsscheibe nach dem Beschichten geschliffen.

Es ist vorstellbar, eine derartige Fertigungsanlage mit mehreren Vorrichtungen zur Beschichtung zu versehen. Diese Weise kann die Taktzeiten reduziert werden. Beispielweise vorstellbar, eine erste Vorrichtung zur Beschichtung einer ersten Seite und eine zweite Vorrichtung zur Beschichtung einer zweiten Seite des Grundkörpers vorzusehen. Auf diese Weise können die Vorrichtungen und die Absaugeinheiten effizient an die Flanschkontur des Grundkörpers auf der jeweiligen Seite angepasst werden, sodass sich die Absaugleistung weiter erhöht.

Die Vorrichtung kann in einer industriellen Umgebung eingesetzt werden. Die Maschinenbediener sind einer deutlich geringeren Belastung ausgesetzt. Demnach kann der Umfang der persönlichen Schutzmaßnahmen reduziert werden.

Weitere Merkmale und Vorteile der Erfindung ergeben sich aus der nachfolgenden Beschreibung und Erläuterung mehrerer beispielhafter Ausführungsbeispiele unter Bezugnahme auf die Zeichnungen. Es zeigen:
- Fig. 1:: eine perspektivische Ansicht einer beispielhaften Ausgestaltung einer Vorrichtung zur Beschichtung von Bremsscheiben;
- Fig. 2:: einen Halbschnitt einer beschichteten Bremsscheibe in perspektivischer Darstellung;
- Fig. 3:: eine weitere perspektivische Ansicht der Anordnung gemäß Fig. 1, unter Auslassung des Gehäuses;
- Fig. 4:: eine weitere perspektivische Ansicht der Vorrichtung gemäß den Figuren 1 und 3, mit teilweise ausgeblendetem Gehäuse;
- Fig. 5:: eine vergrößerte Teildarstellung der Anordnung gemäß Fig. 4, zur Veranschaulichung einer Ausführungsform einer Absaugeinrichtung;
- Fig. 6:: eine geschnittene Teilansicht einer beispielhaften Ausgestaltung eines Kragens einer Absaugeinheit;
- Fig. 7:: eine vereinfachte schematische Draufsicht auf die Anordnung gemäß den Figuren 1 sowie 3 bis 6, zur weiteren Veranschaulichung der Absaugeinrichtung;
- Fig. 8:: eine vereinfachte schematische Ansicht zur Veranschaulichung einer weiteren beispielhaften Ausgestaltung einer Absaugeinrichtung; und
- Fig. 9:: eine schematische Ansicht einer Anlage zur Herstellung von Bremsscheiben.

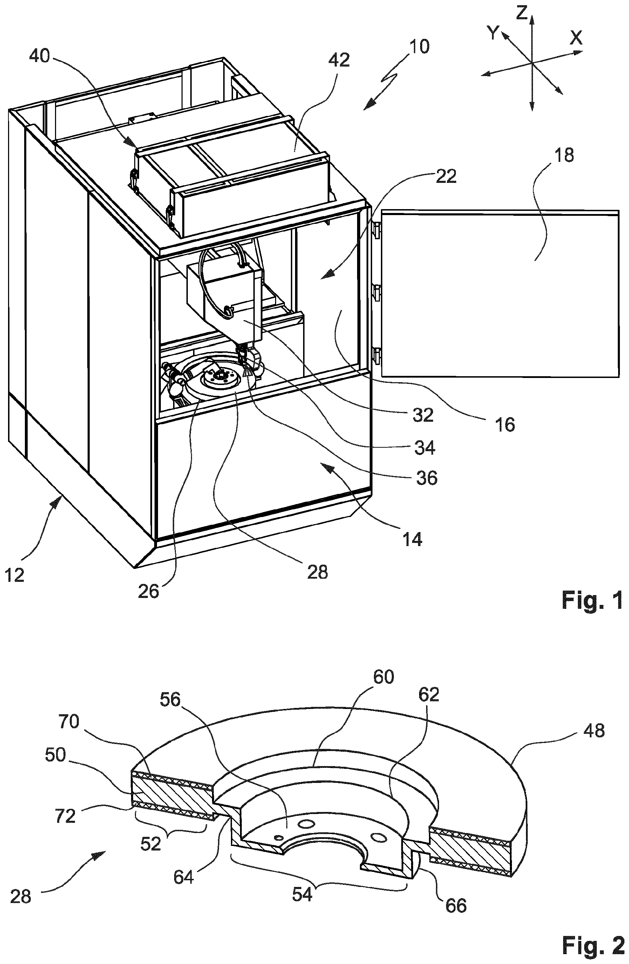

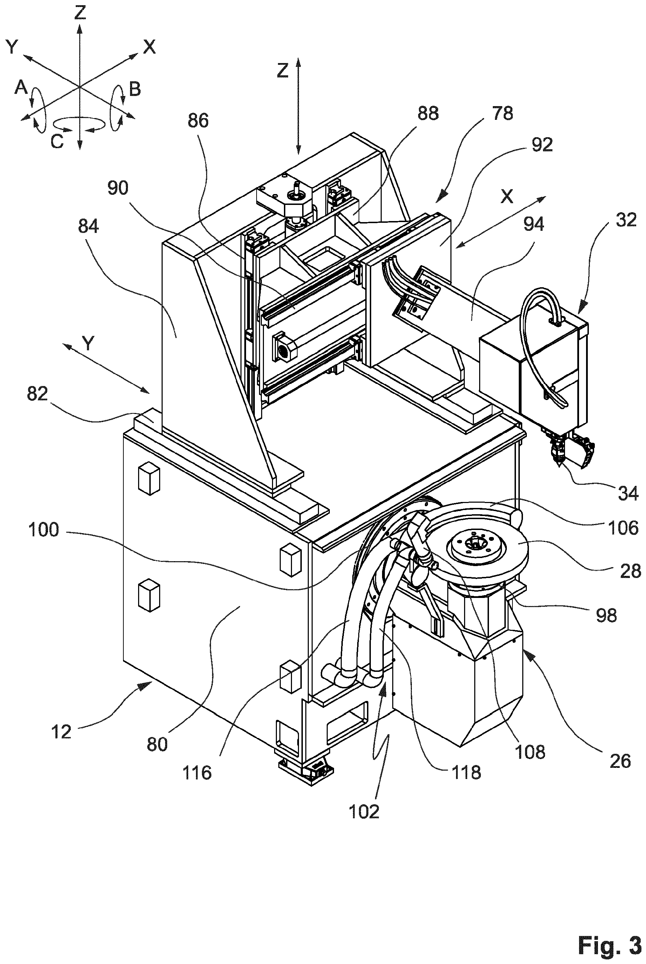

Fig. 1 zeigt eine perspektivische Ansicht einer insgesamt mit 10 bezeichneten Vorrichtung zur Beschichtung von Bremsscheiben. Aspekte und beispielhafte Ausgestaltungen der Vorrichtung 10 werden zusätzlich in den Figuren 3 bis 7 veranschaulicht. Die Vorrichtung 10 kann auch als Beschichtungsvorrichtung bezeichnet werden. Die Vorrichtung 10 kann auch als Vorrichtung/Anlage zur additiven Fertigung bezeichnet werden. Die Vorrichtung 10 dient dazu, Material auf ein Werkstück aufzutragen bzw. dort aufzubauen.

In zumindest einigen der Figuren 1 bis 8 ist aus Veranschaulichungsgründen ein kartesisches Koordinatensystem X-Y-Z mit zugehörigen Rotationsachsen AB-C (Fig. 3) dargestellt. Die Achsen X und Y sind im Ausführungsbeispiel horizontale Achsen. Die Achse Z ist eine vertikale Achse. Aus Sicht des Bedieners ist die Achse X eine Querachse und die Achse Y eine Tiefenachse. Die Achse A beschreibt Rotationen um die Achse X. Die Achse B beschreibt Rotationen um die Achse Y. Die Achse C beschreibt Rotationen um die Achse Z. Der Fachmann kann das Koordinatensystem X-Y-Z bedarfsweise in andere Koordinatensysteme überführen. Das Koordinatensystem X-Y-Z dient vorrangig zu Veranschaulichungszwecken und ist daher nicht einschränkend zu interpretieren.

Die Vorrichtung 10 weist eine Basis 12 auf, welche auch als Bett bezeichnet werden kann. Ferner ist ein Gehäuse 14 mit Wänden 16 vorgesehen. Im Ausführungsbeispiel ist eine mit 18 bezeichnete Tür vorgesehen. Die Tür 18 stellt eine Öffnung zu einem Arbeitsraum 22 bereit.

Im Arbeitsraum 22 ist ein Werkstückträger 26 angeordnet, vergleiche auch Fig. 3.Der Werkstückträger 26 trägt ein zu Beschichten des Werkstück 28. Im Arbeitsraum 22 ist ferner ein Beschichtungskopf 32 angeordnet, der eine Auftragsdüse 34 umfasst, über die Beschichtungsmaterial, insbesondere pulverförmiges Beschichtungsmaterial, ausgegeben und auf das Bauteil 28 aufgetragen wird.

Beispielhaft ist die Vorrichtung 10 als Vorrichtung zum Laserauftragsschweißen ausgebildet. Demgemäß ist der Beschichtungskopf 32 mit einer Laserlichtquelle gekoppelt. Ferner ist der Beschichtungskopf 32 mit einer Materialversorgung gekoppelt. Daneben ist der Beschichtungskopf 32 zumindest in beispielhaften Ausgestaltungen mit Einheiten zur Bereitstellung von Prozessmedien (Schutzgas, Kühlmittel, etc.) gekoppelt.

In Fig. 1 ist ferner ein mit 40 bezeichnetes Deckenmodul in einem oberen Bereich des Gehäuses 14 dargestellt. Das Deckenmodul 40 umfasst beispielsweise eine Filtereinheit 42. In beispielhaften Ausgestaltungen wird über die Filtereinheit 42 Luft aus der Umgebung angesaugt. Demgemäß bildet die Filtereinheit 42 zumindest in beispielhaften Ausführungsformen einen Bestandteil einer Absaugeinrichtung.

Fig. 2 veranschaulicht in geschnittener Darstellung eine beispielhafte Gestaltung eines Werkstücks 28 in Form einer Bremsscheibe 48. Im Ausführungsbeispiel handelt es sich um eine Bremsscheibe 48 mit einem Grundkörper 50, der eine (durch Beschichtung erzeugte) Reibfläche 52 trägt. Beispielhaft besteht der Grundkörper 50 aus Grauguss. Andere Materialen sind denkbar. Die die Reibfläche 52 bildende Beschichtung ist regelmäßig härter und verschleißfester als das Material des Grundkörpers 50. Umgekehrt ist das Material des Grundkörpers, zumindest in beispielhaften Ausgestaltungen, zäher als das Material der Reibfläche 52.

Die Bremsscheibe 48 weist ferner in ihrem Zentrum einen Nabenbereich 54 auf. Dieser Bereich ist im montierten Zustand beispielhaft mit einer Radnabe (eines Fahrzeugs) gekoppelt. Im Nabenbereich 54 ist ein Befestigungsflansch 56 ausgebildet.

Im Nabenbereich 54 weist die Bremsscheibe 48 verschiedene Kanten und Kehlen auf, insbesondere im Nabenbereich 54 bzw. benachbart dazu. Beispielhaft zeigt Fig. 2 an einer Vorderseite Innenkanten 60 und Außenkanten 62 auf. An der gegenüberliegenden Rückseite der Bremsscheibe 48 sind in den Kanten 64 und Außenkanten 66 vorgesehen. Die Kanten 60, 62, 64, 66 und der Befestigungsflansch 56 sind anfällig für Anhäufungen überschüssigen Beschichtungsmaterials. Daher wird im Rahmen der vorliegenden Offenbarung, zumindest in einer beispielhaften Ausführungsform, dieser Bereich separat abgesaugt.

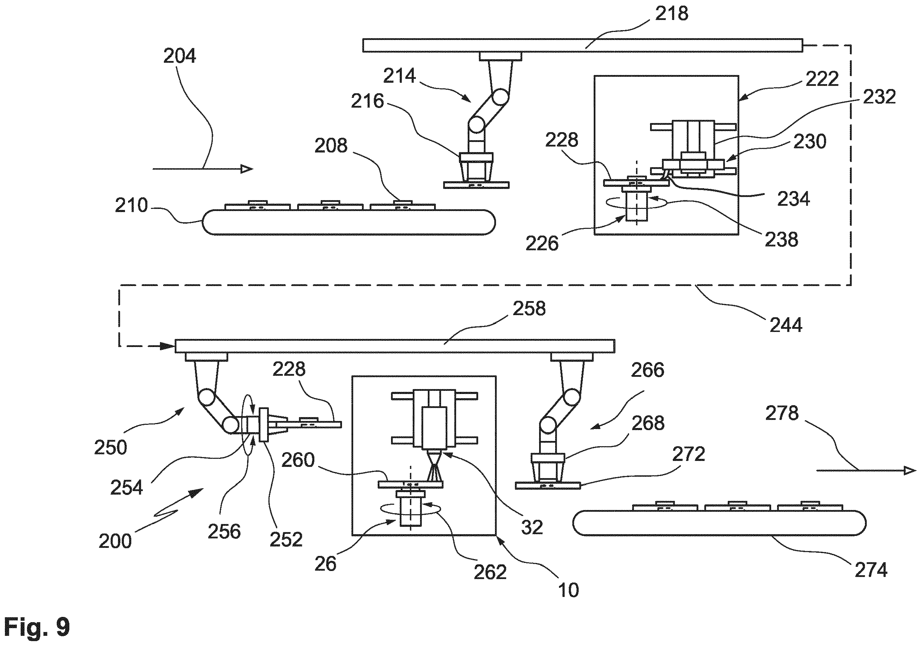

In Fig. 2 ist ferner mit 70 eine Beschichtung der Vorderseite und mit 72 eine Beschichtung der Rückseite der Bremsscheibe 48 angedeutet. Es versteht sich, dass die jeweilige Schichtdicke der Beschichtungen 70, 72 überzeichnet sein kann, insbesondere aus Veranschaulichungsgründen. Die Bremsscheibe 48 ist beidseitig beschichtet. Dies kann realisiert werden, wenn die Vorrichtung 10 eine Einheit zum Wenden der Bremsscheibe 48 aufweist oder mit einer solchen Einheit koppelbar ist, vergleiche Fig. 9.

Die Darstellung in Fig. 3 basiert auf der Darstellung in Fig. 1, wobei aus Veranschaulichungsgründen das Gehäuse 14 ausgeblendet ist. Fig. 3 veranschaulicht eine Handhabungseinrichtung 78, die den Beschichtungskopf 32 trägt. Die Handhabungseinrichtung 78 kann auch als Kinematik bezeichnet werden. Im vorliegenden Ausführungsbeispiel umfasst die Handhabungseinrichtung 78 eine lineare, kartesische Kinematik. Dies ist nicht einschränkend zu verstehen.

Die Vorrichtung 10 weist ein von der Basis 12 getragenes Gestell 80 auf. Am Gestell 80 ist eine Y-Führung 82 ausgebildet. Die Y-Führung 82 trägt ein Fahrportal 84, welches auch als Fahrständer oder Y-Schlitten bezeichnet werden kann. Das Fahrportal 84 weist eine Z-Führung 86 auf. An der Z-Führung ist ein Z-Schlitten 88 angeordnet. Der Z-Schlitten 88 trägt eine X-Führung 90. An der X-Führung 90 ist ein X-Schlitten 92 angeordnet. Der Arbeitskopf 32 ist über eine Traverse 94 am X-Schlitten 92 aufgenommen. Auf diese Weise kann der Arbeitskopf 32 im gezeigten Ausführungsbeispiel in drei Raumrichtungen X-Y-Z verfahren werden. Für die bereitgestellten Bewegungsfreiheitsgrade sind entsprechende Antriebe und Steuerungen vorgesehen.

Ferner veranschaulicht Fig. 3 die weitere Gestaltung des Werkstückträgers 26. Das Werkstück 28 ist auf einer Drehachse in Form einer Drehspindel 98 angeordnet, die eine C-Achse (Rotation um die Z-Achse) bereitstellt. Auf diese Weise kann das Werkstück 28 ähnlich einer Schallplatte gedreht werden. Ferner ist zumindest in beispielhaften Ausführungsformen ein Schwenkantrieb 100 vorgesehen, der am Gestell 80 aufgenommen ist. Der Schwenkantrieb 100 stellt bedarfsweise eine B-Achse (Rotation um die Y-Achse) bereit. Für die bereitgestellten Bewegungsfreiheitsgrade sind entsprechende Antriebe und Steuerungen vorgesehen.

Mit Bezugnahme auf die Figuren 3 bis 7 werden beispielhafte Ausgestaltungen einer mit 102 bezeichneten Absaugeinrichtung beschrieben. Die Absaugeinrichtung 102 ist mehrstufig ausgebildet und umfasst mehrere Absaugeinheiten. In der veranschaulichten beispielhaften Ausführungsform sind drei Absaugeinheiten 104, 106, 108 vorgesehen, welche miteinander kombinierbar sind. Insbesondere aus Veranschaulichungsgründen werden die Absaugeinheiten als erste Absaugeinheit 104, zweite Absaugeinheit 106 und dritte Absaugeinheit 108 bezeichnet. Dies ist nicht als qualitative Reihenfolge zu verstehen.

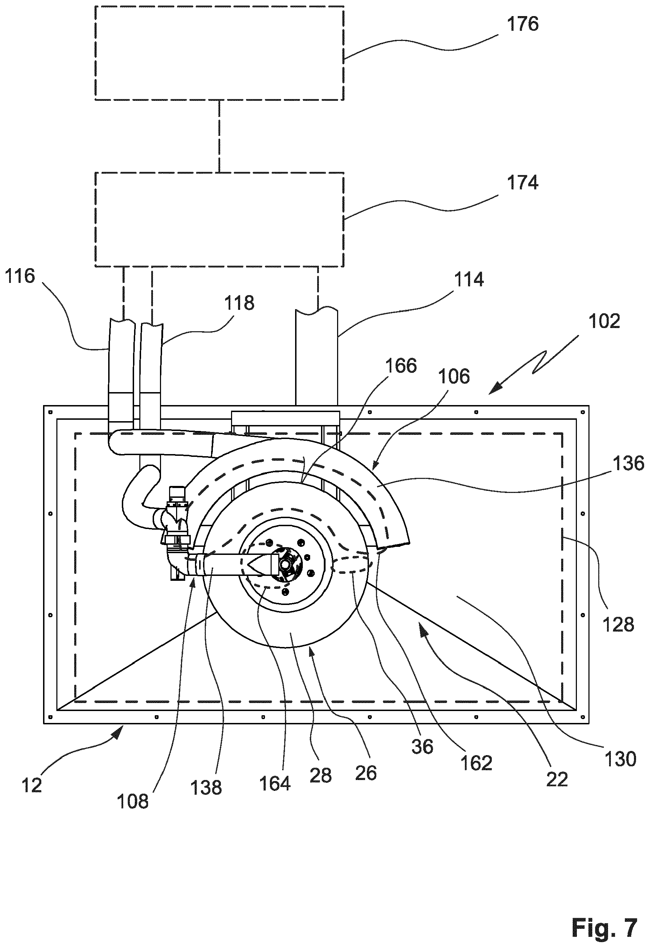

Den Figuren 3 bis 6 und insbesondere der Fig. 7 ist ferner entnehmbar, dass im Ausführungsbeispiel die erste Absaugeinheit 104 eine erste Absaugleitung 114 aufweist. Die zweite Absaugeinheit 106 weist eine zweite Absaugleitung 116 auf. Die dritte Absaugeinheit 108 weist eine dritte Absaugleitung 118 auf. Auf diese Weise gibt es im Ausführungsbeispiel separate Senken für die jeweilige Strömung und die von der Strömung mitgenommenen Partikel.

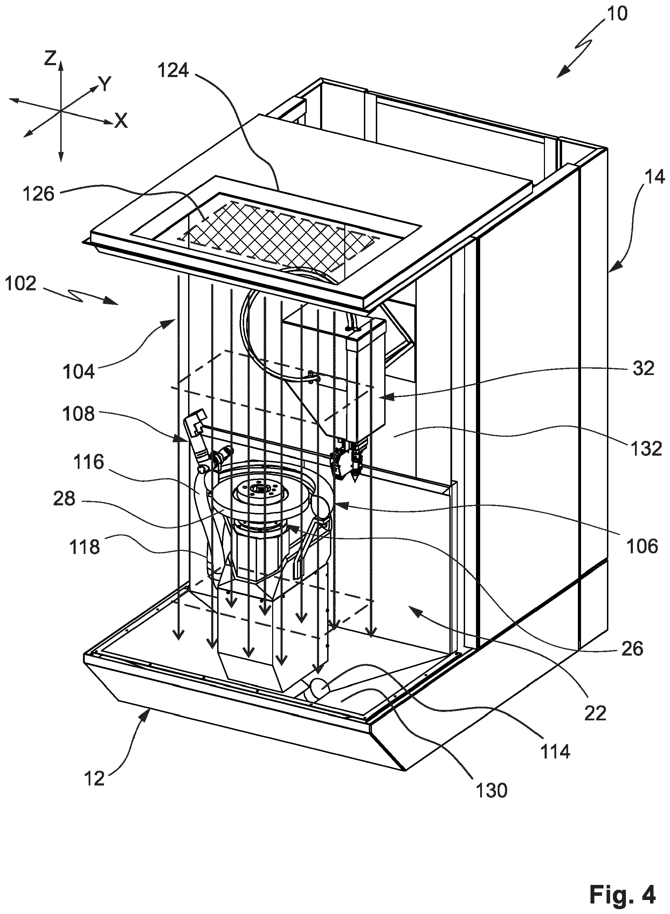

Die erste Absaugeinheit 104 kann auch als stetige oder globale Absaugeinheit 104 bezeichnet werden. Die Absaugeinheit 104 wird mit Bezugnahme auf Fig. 4 näher veranschaulicht. Die Absaugeinheit 104 erzeugt eine vertikal orientierte Strömung durch den Arbeitsraum 22 der Vorrichtung 10 hindurch. In beispielhaften Ausgestaltungen ist die Strömung näherungsweise laminar. Die von der Absaugeinheit 104 erzeugte Strömung durchströmt den Arbeitsraum 22 im Ausführungsbeispiel von oben nach unten.

In Fig. 4 ist im oberen Bereich des Gehäuses 14 eine Einlassöffnung 124 ausgebildet, vergleiche die Darstellung des Deckenmoduls 40 in Fig. 1. Angesaugtes Fluid, insbesondere angesaugt Luft, kann durch den Filter 42 des Deckenmoduls 40 und durch die Einlassöffnung 124 hindurch in den Arbeitsraum 22 einströmen. In Fig. 4 ist ferner mit 126 ein Strömungsquerschnitt der durch die erste Absaugeinheit 104 erzeugten Strömung angedeutet. Vorzugsweise deckt der Strömungsquerschnitt 126 einen Großteil des Querschnitts des Arbeitsraums 22 ab. In diesem Zusammenhang wird auf Fig. 7 und den dort angedeuteten Querschnitt 128 des Arbeitsraums 22 verwiesen. In beispielhaften Ausgestaltungen deckt der Strömungsquerschnitt 126 zumindest 50 % des Querschnitts 128 ab. In weiteren Ausgestaltungen deckt der Strömungsquerschnitt 126 zumindest 80 % des Querschnitts 128 ab.

In Fig. 4 ist ferner eine Wanne oder Bodenwanne 130 angedeutet, welche in die erste Absaugleitung 114 mündet. Die Wanne 130 weist geneigte Flanken auf. Auf diese Weise kann überschüssiges Beschichtungsmaterial, das durch die Strömung der ersten Absaugeinheit 104 mitgenommen wurde, der Absaugleitung 114 zugeführt werden. Ferner veranschaulicht Fig. 4 mit 132 eine beispielhafte Ausgestaltung einer Abdeckung der Handhabungseinrichtung 78. Bei der Abdeckung 132 handelt es sich beispielsweise um Faltenbälge o. ä. Insgesamt kann bei hinreichend geschlossenem und abgedichteten Bauraum 22 durch die Absaugeinrichtung 102 ein Großteil des überschüssigen Beschichtungsmaterials aufgefangen und abgeführt werden.

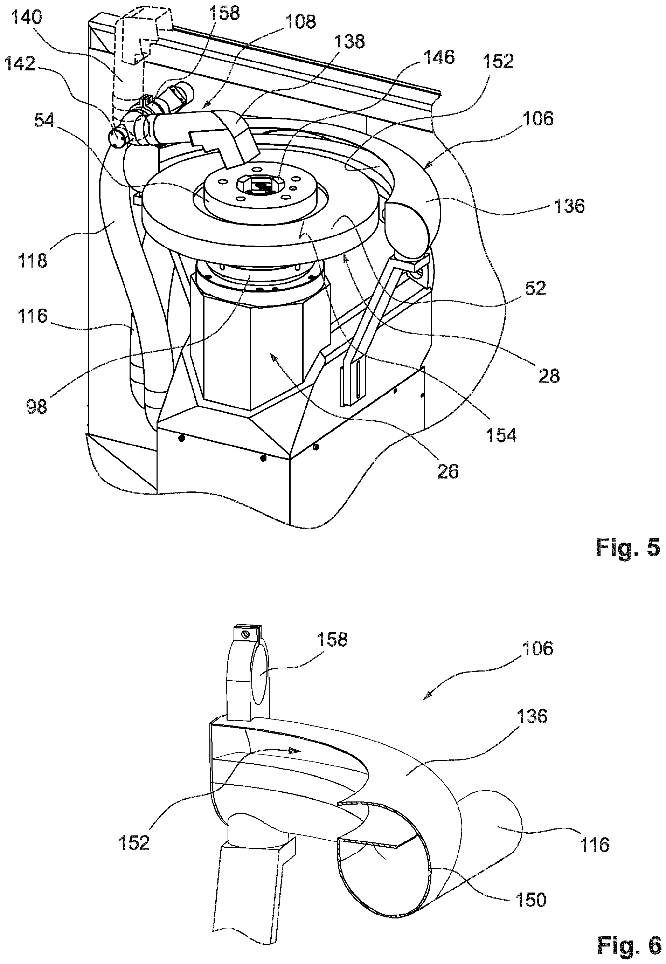

Die zweite Absaugeinheit 106 und die dritte Absaugeinheit 108 werden mit Bezugnahme auf das Ausführungsbeispiel gemäß Fig. 5 näher veranschaulicht. Die zweite Absaugeinheit 106 umfasst einen Kragen 136, der in die zweite Absaugleitung 116 mündet, vergleiche auch Fig. 6. Der Kragen 136 umgibt einen Umfangsabschnitt des Werkstücks 28. Die dritte Absaugeinheit 108 umfasst ein Saugstück 138, welches auch als Saugrüssel bezeichnet werden kann. Das Saugstück 138 mündet in die dritte Absaugleitung 118. Im gezeigten Ausführungsbeispiel kann die dritte Absaugeinheit 108 zwischen einer Betriebsstellung und einer Ausweichstellung bewegt werden. Die Ausweichstellung ist in Fig. 5 durch eine mit 140 bezeichnete gestrichelte Darstellung angedeutet. Zur Bewegung zwischen der Ausweichstellung 140 und der Betriebsstellung ist ein Schwenkantrieb 142 vorgesehen. In der Betriebsstellung kann das Saugstück 138 das Werkstück 28 im Nabenbereich 54 absaugen und reinigen (vergleiche hierzu Fig. 2).

In der Ausweichstellung 140 der dritten Absaugeinheit 108 kann das Werkstück 28 von der Drehspindel 98 entfernt bzw. auf der Drehspindel 98 abgesetzt und gespannt werden. An der Drehspindel 98 ist im Ausführungsbeispiel eine Spanneinrichtung 146 vorgesehen, die das Werkstück 28 im Bereich von dessen Befestigungsflansch 56 spannt.

Fig. 6 veranschaulicht anhand eines Schnittes eine beispielhafte Gestaltung eines Profils 150 des Kragens 136. Im Ausführungsbeispiel ist das Profil 150 etwa G-förmig. Die "Öffnung" des G-Profils definiert eine schlitzartige Eintrittsöffnung 152. Durch die Einlassöffnung 152 kann pulverförmiges Material in das Profil 150 eintreten und wird in dessen Bauch gesichert und über die Absaugleitung 116 abgeführt. Der Kragen 136 ist etwa sichelförmig gestaltet, zumindest in beispielhaften Ausgestaltungen.

Im Ausführungsbeispiel ist der Kragen 136 (bzw. dessen Eintrittsöffnung 152) auf einem Höhen-Niveau (Z-Richtung) angeordnet, dass etwa der Z-Position einer Oberfläche 154 des Werkstücks 28 entspricht, auf der die Reibfläche 52 erzeugt wird, vergleiche hierzu Fig. 5. Überschüssiges Pulver kann folglich über den Kragen 136 der zweiten Absaugeinheit 106 radial abgesaugt werden.

Ergänzend veranschaulicht Fig. 6 eine beispielhafte Ausgestaltung, bei der am Kragen 136 der zweiten Absaugeinheit 106 ein Halter 158 für das Saugstück 138 der dritten Absaugeinheit 108 angeordnet ist. Der Halter 158 definiert im Ausführungsbeispiel ferner die Schwenkachse 142 für den Drehantrieb, vergleiche Fig. 5.

Fig. 7 zeigt eine Draufsicht auf den Arbeitsraum 22. Am unteren Ende des Arbeitsraums 22 ist die Wanne 130 angeordnet. In Fig. 7 ist mit 162 ein Wirkbereich der zweiten Absaugeinheit 106 und mit 164 ein Wirkbereich der dritten Absaugeinheit 108 angedeutet. Die Ansicht zeigt ferner, dass der Kragen 136 der zweiten Absaugeinheit 106 ähnlich einem Schutzblech das Werkstück 28 an einem Abschnitt des Umfangs 166 umgibt. Beispielhaft umgibt der Kragen 136 das Werkstück 28 entlang eines Umfangsbereichs von ca. 170°. Damit wird einerseits ein beträchtlicher Bereich des Umfangs 166 abgedeckt. Andererseits ist das Werkstück 28 nicht vollständig umschlossen. Die zweite Absaugeinheit 106 wirkt in einem Randbereich auf das Werkstück 28 ein. Die dritte Absaugeinheit 108 wirkt in einem Zentrum auf das Werkstück 28 ein, insbesondere im Nabenbereich 54. Das Werkstück 28 dreht sich in der in Fig. 7 gezeigten Orientierung beispielhaft im Gegenuhrzeigersinn. Das Bezugszeichen 36 veranschaulicht ein Bereich, in dem der Beschichtungskopf 32 auf das sich drehende Werkstück 28 einwirkt, zumindest in beispielhaften Ausgestaltungen, vergleiche hierzu Fig. 1.

Fig. 7 veranschaulicht ferner die Absaugleitungen 114, 116, 118, die den Absaugeinheiten 104 (nicht vollständig dargestellt), 106 und 108 zugeordnet sind. Die Absaugleitungen 114, 116, 118 erstrecken sich im Ausführungsbeispiel in einen rückwärtigen Bereich der Vorrichtung 10, in das Gestell 80 hinein (vergleiche auch Fig. 3). Lediglich schematisch angedeutet ist in Fig. 7 ferner eine Filtereinheit 174 und eine Rückgewinnungseinheit 176. In beispielhaften Ausführungsformen umfasst die Vorrichtung derartige Einheiten, welche zur Aussonderung und/oder Rückgewinnung überschüssigen Beschichtungsmaterials nutzbar sind. In weiteren Ausführungsformen sind derartige Einheiten vorgesehen, um das abgesaugte Fluid (Abluft) zu reinigen, beispielsweise von Pulverrückständen in Form sehr kleiner Pulverpartikel.

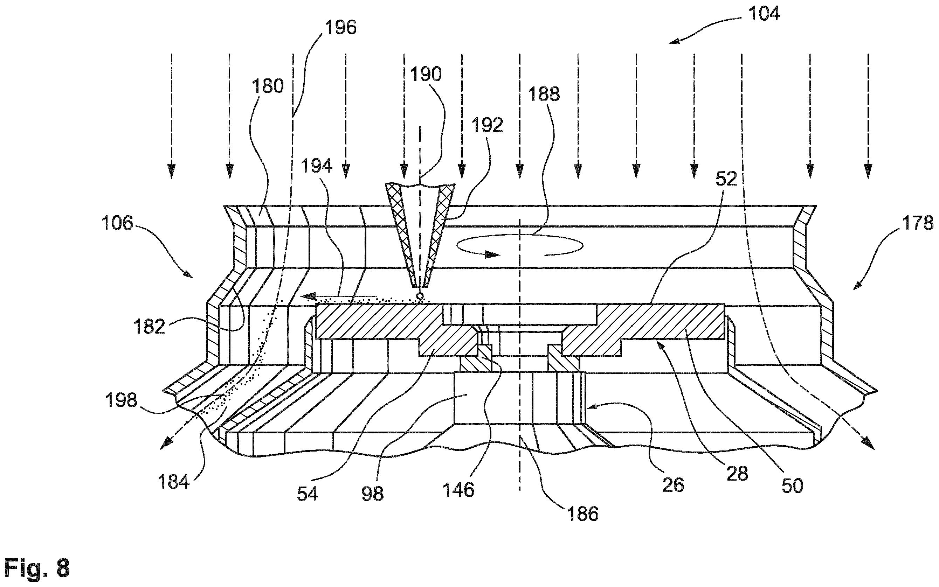

Fig. 8 veranschaulicht eine weitere beispielhafte Ausgestaltung der zweiten Absaugeinheit 106. Im Ausführungsbeispiel nutzt die zweite Absaugeinheit 106 zumindest teilweise die durch die erste Absaugeinheit 104 erzeugte Strömung.

Wie zuvor bereits beschrieben ist das Werkstück 28 auf einem Werkstückträger 26 aufgenommen, beispielsweise unter Nutzung einer Spanneinrichtung 146. Das Werkstück 28 umfasst einen Grundkörper 50, der eine zu beschichtende Reibfläche 52 aufweist. Ferner ist ein Nabenbereich 54 ausgebildet, in dem das Werkstück 28 am Werkstückträger 26 gespannt und gehalten ist. Das Werkstück 28 sitzt auf einer Drehspindel 98 und kann folglich rotiert werden.

Im Ausführungsbeispiel gemäß Fig. 8 weist die zweite Absaugeinheit 106 einen Kragen 178 auf, der das Werkstück 28 vollständig oder nahezu vollständig ringartig umgibt. Der Kragen 178 weist eine Eintrittsöffnung 180, Umlenkflächen 182 und einen Austrittsbereich 184 auf. Das Ausführungsbeispiel nutzt die Fliehkraft zur Verbesserung der Absaugleistung. Die Drehspindel 98 kann das Werkstück 28 um die Drehachse 186 rotieren, vergleiche den gekrümmten Doppelpfeil 188. Der Kragen 178 wird im Ausführungsbeispiel nicht rotiert.

In Fig. 8 ist ferner schematisch mit 190 ein Laser und mit 192 eine Materialzufuhr/Pulverzufuhr angedeutet. Die Elemente 190, 192 bilden Bestandteile eines Beschichtungskopfes 32 (vergleiche Fig. 1).

Überschüssiges Pulver kann nun fliehkraftunterstützt abgeführt werden, vergleiche den radial nach außen geführten Pfeil 194. In einer beispielhaften Ausführungsform ist die zweite Absaugeinheit 106 zur mittelbaren/indirekten Absaugung ausgebildet. Mit anderen Worten nutzt die zweite Absaugeinheit 106 eine von der ersten Absaugeinheit 104 bereitgestellte Strömung 196. Beispielhaft verläuft die von der zweiten Absaugeinheit 106 erzeugte Strömung 196 im Wesentlichen vertikal, zum Beispiel nach unten gerichtet, analog zu der Gestaltung gemäß Fig. 4. Demgemäß kann die Strömung 196 in die Eintrittsöffnung 180 des Kragens 178 eindringen. Überschüssiges Beschichtungsmaterial, welches durch die Fliehkraft 194 in Richtung auf die Umlenkfläche 182 gedrängt wird, kann durch die Strömung 196 mitgenommen werden. Die Strömung 196 kann sodann den Kragen 178 über den Austrittsbereich 184 verlassen, vergleiche die schematisch mit 198 angedeuteten abgelenkten und abgeführten Partikel.

Es versteht sich, dass das Ausführungsbeispiel gemäß Fig. 8 grundsätzlich auch mit einer direkten Absaugung über eine Absaugleitung koppelbar ist, vergleiche hierzu die zuvor schon beschriebene Gestaltung der zweiten Absaugeinheit 106 mit Bezugnahme auf die Figuren 5 und 6. Auch dabei kann Fliehkraft genutzt werden, um die Absaugleistung zu erhöhen.

Fig. 9 veranschaulicht anhand einer schematischen, stark vereinfachten Darstellung eine beispielhafte Ausführungsform einer insgesamt mit 200 bezeichneten Anlage zur Herstellung von Bremsscheiben. Die Anlage 200 nutzt eine Beschichtungsvorrichtung 10 gemäß zumindest einem der hierin beschriebenen Aspekte.

Ein mit 204 bezeichneter Pfeil kennzeichnet eine Zufuhr/Bereitstellung von Halbzeugen 208, die im Ausführungsbeispiel über eine Förderstrecke 210 zugeführt werden. Ein als Roboter gestalteter Manipulator 214 mit einem Greifer 216 transferiert die Halbzeuge 208 zwischen der Förderstrecke 210 und einer Bearbeitungsstation. Der Manipulator 214 ist an einer Führungsschiene 218 angeordnet.

Die Bearbeitungsstation ist im Ausführungsbeispiel als Drehstation 222 gestaltet, insbesondere als vertikale Drehmaschine. Die Drehstation 222 weist einen Werkstückträger 226 zur Aufnahme von Werkstücken 228 auf. Ferner ist ein an einem Kreuzschlitten 232 verfahrbarer Werkzeughalter 230 vorgesehen. Der Werkzeughalter 230 trägt ein Drehwerkzeug 234. Der Werkstückträger 226 ist Bestandteil einer Spindel, die das Werkstück 228 in Rotationen versetzen kann, vergleiche den gekrümmten Pfeil 238. Auf diese Weise können Drehbearbeitungen am Werkstück 228 vorgenommen werden.

Von der Drehstationen 222 werden die Werkstücke 228 mit einer Transfereinrichtung 244 zu einer Beschichtungsvorrichtung 10 überführt. Die Transfereinrichtung 244 umfasst beispielhaft einen als Roboter gestalteten Manipulator 250, der an einer Führungsschiene 258 aufgenommen ist. Der Manipulator 250 umfasst einen Greifer 252 zur Aufnahme und Abgabe der Werkstücke 228. Beispielhaft ist der Manipulator 250 auch dazu ausgestaltet, Werkstücke zu wenden. Zu diesem Zweck ist eine drehbare Wendeeinheit 254 vorgesehen, vergleiche den gekrümmten Doppelpfeil 256, der die Drehbewegung veranschaulicht. Auf diese Weise ist es möglich, Werkstücke um 180° zu drehen, damit beide Seiten bearbeitet/beschichtet werden können.

Der Manipulator 250 übergibt an die Beschichtungsvorrichtung 10, die in zuvor schon beschriebener Weise mit einem Werkstückträger 26 zur Aufnahme von Werkstücken 260 sowie einen Beschichtungskopf 32 zur Beschichtung der Werkstücke 260 versehen ist. Unter Hinzunahme der Wendeeinheit 254 können Werkstücke 260 beidseitig beschichtet werden. Es versteht sich, dass die Wendeeinheit 254 auch anderweitig gestaltet sein kann. Insbesondere kann die Wendeeinheit 254 auch direkt in der Vorrichtung 10 verbaut sein.

Die Anlage 200 kann mehrere Beschichtungsvorrichtungen 10 umfassen. Auf diese Weise kann eine Optimierung/Minimierung der Taktzeiten erfolgen. Beispielsweise ist es vorstellbar, bei der Anlage 200 eine erste Beschichtungsvorrichtung für eine erste Seite und eine zweite Beschichtungsvorrichtung für eine zweite Seite der Bremsscheiben vorzusehen. Ferner ist es vorstellbar, die Anzahl der Beschichtungsvorrichtung 10 zu erhöhen, um deren Taktzeiten an Taktzeiten weiterer Stationen der Anlage 200 anzupassen, damit insgesamt eine hohe Auslastung erzielt wird.

Zum Entladen der Vorrichtung 10 ist im Ausführungsbeispiel ein weiterer Manipulator 266 mit einem Greifer 268 vorgesehen. Beschichtete Werkstücke 272 verlassen die Vorrichtung 10 als Fertigteile. Es versteht sich, dass gleichwohl weitere Fertigungsschritte möglich sind, insbesondere ein Schleifen der beschichteten Flächen. Die Werkstücke 272 werden im Ausführungsbeispiel an eine Förderstrecke 274 übergeben. Ein mit 278 bezeichneter Pfeil kennzeichnet die Abgabe der Werkstücke 272, beispielsweise für weitere Fertigungsschritte, wie etwa das Schleifen.

## Patentansprüche

1. Vorrichtung zur Beschichtung von Bremsscheiben, insbesondere mittels Laserauftragsschweißen, die Folgendes aufweist:
- eine Basis (12) mit einem Gehäuse (14), das einen Arbeitsraum (22) bildet,
- einen Werkstückträger (26) im Arbeitsraum (22), wobei der Werkstückträger (26) zur Aufnahme eines Grundkörpers (50) einer Bremsscheibe (48) ausgebildet ist,
- einen Beschichtungskopf (32), der zur Erzeugung einer Beschichtung auf dem Grundkörper (50) ausgebildet ist, insbesondere durch thermisch induzierten Auftrag eines Pulverwerkstoffs,
- eine Handhabungseinrichtung (78), die Relativbewegungen zwischen dem Werkstückträger (26) und dem Beschichtungskopf (32) erzeugt, und
- eine Absaugeinrichtung (102) zur Absaugung überschüssigen Materials aus dem Arbeitsraum (22),
**dadurch gekennzeichnet,**
**dass** die Absaugung mehrstufig erfolgt und zumindest zwei Absaugstufen aufweist,
**dass** eine erste Absaugeinheit (104) für eine erste der Absaugstufen vorgesehen ist, die beim Betrieb eine vertikal ausgerichtete Strömung im Arbeitsraum (22) erzeugt,
**dass** eine zweite Absaugeinheit (106) für eine zweite der Absaugstufen vorgesehen ist, und
**dass** die zweite Absaugeinheit (106) einen Kragen (136, 178) umfasst, der beim Betrieb einem Umfangsabschnitt (166) des Grundkörpers (50) zugeordnet ist, mit einer Saugleitung (116) verbunden ist und beim Betrieb überschüssiges Material vom Umfangsabschnitt (166) absaugt.

2. Vorrichtung nach Anspruch 1, wobei die Absaugung zweistufig oder dreistufig erfolgt.

3. Vorrichtung nach Anspruch 1 oder 2, wobei die erste Absaugeinheit (104) im Arbeitsraum (22) beim Betrieb eine stetige Strömung erzeugt.

4. Vorrichtung nach einem der Ansprüche 1-3, wobei die erste Absaugeinheit (104) beim Betrieb eine nach unten gerichtete Strömung im Arbeitsraum (22) erzeugt, die den am Werkstückträger (26) aufgenommenen Grundkörper (50) umströmt.

5. Vorrichtung nach einem der Ansprüche 1-4, wobei die erste Absaugeinheit (104) beim Betrieb eine gerichtete Strömung durch den Arbeitsraum (22) hindurch erzeugt, und wobei ein horizontaler Strömungsquerschnitt (126) der gerichteten Strömung mindestens 50 %, vorzugsweise mindestens 80 % des horizontalen Querschnitts (128) des Arbeitsraums (22) abdeckt.

6. Vorrichtung nach einem der Ansprüche 1-5, wobei der Kragen (136, 178) der zweiten Absaugeinheit (106) definiert vom Umfang des Grundkörpers (50) beabstandet ist und einen Umfangsabschnitt (166) von mindestens 120°, vorzugsweise von mindestens 150°, weiter bevorzugt von mindestens 180° abdeckt, oder wobei der Kragen (136, 178) der zweiten Absaugeinheit (106) den Umfang des Grundkörpers (50) vollständig umschließt.

7. Vorrichtung nach einem der Ansprüche 1-6, wobei der Kragen (136, 178) der zweiten Absaugeinheit (106) derart gestaltet und angeordnet ist, dass die zweite Absaugeinheit (106) während des Materialauftrags, bei aktivem Beschichtungskopf (32), zur Absaugung auf den Grundkörper (50) einwirken kann.

8. Vorrichtung nach einem der Ansprüche 1-7, wobei der Kragen (136, 178) der zweiten Absaugeinheit (106) derart gestaltet und angeordnet ist, dass bei einem sich drehenden Grundkörper (50) ein Abschnitt, der vom Beschichtungskopf (32) beschichtet wurde, nach dem Beschichten, vorzugsweise unmittelbar nach dem Beschichten, des Abschnitts in einen Wirkbereich (162) des Kragens (136, 178) eintritt.

9. Vorrichtung nach einem der Ansprüche 1-8, wobei die zweite Absaugeinheit (106) beim Betrieb zumindest dann aktiviert ist, wenn der Beschichtungskopf (32) aktiv ist.

10. Vorrichtung nach einem der Ansprüche 1-9, wobei eine dritte Absaugeinheit (108) für eine dritte der Absaugstufen vorgesehen ist, und wobei die dritte Absaugeinheit (108) dazu ausgebildet ist, beim Betrieb überschüssiges Material aus einem Zentrum, insbesondere aus einem Nabenbereich (54), des Grundkörpers (50) abzusaugen.

11. Vorrichtung nach Anspruch 10, wobei die dritte Absaugeinheit (108) einen Antrieb (142) aufweist, der die dritte Absaugeinheit (108) zwischen einer Arbeitsstellung und einer Ausweichstellung (140) bewegt, und/oder wobei die dritte Absaugeinheit (108) mit einer Absaugleitung (116) verbunden ist.

12. Vorrichtung nach einem der Ansprüche 1-11, wobei der Werkstückträger (26) eine Drehachse für den Grundkörper (50) umfasst.

13. Vorrichtung nach einem der Ansprüche 1-12, ferner aufweisend eine Wendeeinheit (254) für den Grundkörper (50).

14. Vorrichtung nach einem der Ansprüche 1-13, ferner aufweisend eine Filtereinheit (174) zur Abscheidung des pulverförmigen Beschichtungsmaterials aus dem abgesaugten Fluid.

15. Fertigungsanlage zur Herstellung von Bremsscheiben, **gekennzeichnet durch** eine Vorrichtung (10) nach einem der Ansprüche 1-14, zumindest eine weitere Bearbeitungsstation (222), insbesondere eine Drehstation, Bohrstation oder Schleifstation, und eine Transfereinrichtung (244) zum Transferieren der Werkstücke zwischen den Bearbeitungsstationen (10, 222).

## Claims

1. Device for coating brake discs, in particular by laser cladding, comprising:
- a base (12) with a housing (14) forming a working space (22),
- a workpiece carrier (26) in the working space (22), wherein the workpiece carrier (26) is configured to hold a base body (50) of a brake disc (48),
- a coating head (32) configured to produce a coating on the base body (50), in particular by thermally induced deposition of a powder material,
- a handling device (78) that generates relative movements between the workpiece carrier (26) and the coating head (32), and
- a suction device (102) for sucking off excess material from the working space (22),
**characterized in that**
the suction is multi-stage and comprises at least two suction stages,
a first suction unit (104) is provided for a first of the suction stages, which generates a vertically oriented flow in the working space (22) during operation,
a second suction unit (106) is provided for a second of the suction stages, and
the second suction unit (106) comprises a collar (136, 178) that is associated to a circumferential section (166) of the base body (50) during operation, connected to a suction line (116) and that sucks off excess material from the circumferential section (166) during operation.

2. Device according to claim 1, wherein the suction is two-stage or three-stage.

3. Device according to claim 1 or 2, wherein the first suction unit (104) generates a continuous flow in the working space (22) during operation.

4. Device according to any one of claims 1-3, wherein the first suction unit (104) generates a downward directed flow in the working space (22) during operation, which flows around the base body (50) held on the workpiece carrier (26).

5. Device according to any one of claims 1-4, wherein the first suction unit (104) generates a directed flow through the working space (22) during operation, and wherein a horizontal flow cross-section (126) of the directed flow covers at least 50%, preferably at least 80%, of the horizontal cross-section (128) of the working space (22).

6. Device according to any one of claims 1-5, wherein the collar (136, 178) of the second suction unit (106) is disposed at a defined distance from the circumference of the base body (50) and covers a circumferential section (166) of at least 120°, preferably of at least 150°, more preferably of at least 180°, or wherein the collar (136, 178) of the second suction unit (106) fully surrounds the circumference of the base body (50).

7. Device according to any one of claims 1-6, wherein the collar (136, 178) of the second suction unit (106) is configured and arranged such that the second suction unit (106) can act on the base body (50) for sucking off during material deposition with an active coating head (32).

8. Device according to any one of claims 1-7, wherein the collar (136, 178) of the second suction unit (106) is configured and arranged such that when the base body (50) rotates, a section that has been coated by the coating head (32) enters a working area (162) of the collar (136, 178) after coating, preferably immediately after coating the section.

9. Device according to any one of claims 1-8, wherein the second suction unit (106) is activated during operation at least when the coating head (32) is active.

10. Device according to any one of claims 1-9, wherein a third suction unit (108) is provided for a third of the suction stages, and wherein the third suction unit (108) is configured to suck off excess material from a center, in particular from a hub area (54), of the base body (50) during operation.

11. Device according to claim 10, wherein the third suction unit (108) comprises a drive (142) that moves the third suction unit (108) between a working position and a retracted position (140) and/or wherein the third suction unit (108) is connected to a suction line (116).

12. Device according to any one of claims 1-11, wherein the workpiece carrier (26) comprises a rotation axis for the base body (50).

13. Device according to any one of claims 1-12, further comprising a turning unit (254) for the base body (50).

14. Device according to any one of claims 1-13, further comprising a filter unit (174) for separating the powdery coating material from the extracted fluid.

15. Manufacturing system for producing brake discs, **characterized by** a device (10) according to any one of claims 1-14, at least one further processing station (222), in particular a turning station, drilling station, or grinding station, and a transfer device (244) for transferring the workpieces between the processing stations (10, 222).

## Revendications

1. Dispositif de revêtement de disques de frein, notamment par soudage par rechargement au laser, présentant les éléments suivants :
- une base (12) avec un boîtier (14) formant un espace de travail (22),
- un porte-pièce (26) dans l'espace de travail (22), le porte-pièce (26) étant configuré pour recevoir un corps de base (50) d'un disque de frein (48),
- une tête de revêtement (32) qui est configurée pour produire un revêtement sur le corps de base (50), notamment par application induite thermiquement d'un matériau en poudre,
- un appareil de manipulation (78) qui produit des mouvements relatifs entre le porte-pièce (26) et la tête de revêtement (32), et
- un appareil d'aspiration (102) pour aspirer le matériau en excès de l'espace de travail (22),
**caractérisé**
**en ce que** l'aspiration s'effectue en plusieurs étapes et présente au moins deux étapes d'aspiration,
**en ce qu'**il est prévu une première unité d'aspiration (104) pour une première des étapes d'aspiration qui, lors du fonctionnement, produit un flux orienté verticalement dans l'espace de travail (22),
**en ce qu'**il est prévu une deuxième unité d'aspiration (106) pour une deuxième des étapes d'aspiration, et
**en ce que** la deuxième unité d'aspiration (106) comprend un collet (136, 178) qui, lors du fonctionnement, est associé à une section périphérique (166) du corps de base (50), est relié à une conduite d'aspiration (116) et, lors du fonctionnement, aspire le matériau en excès de la section périphérique (166).

2. Dispositif selon la revendication 1, dans lequel l'aspiration s'effectue en deux étapes ou trois étapes.

3. Dispositif selon la revendication 1 ou 2, dans lequel la première unité d'aspiration (104) produit un flux continu dans l'espace de travail (22) lors du fonctionnement.

4. Dispositif selon l'une quelconque des revendications 1 à 3, dans lequel la première unité d'aspiration (104) génère, lors du fonctionnement, un flux dirigé vers le bas dans l'espace de travail (22), qui circule autour du corps de base (50) reçu sur le porte-pièce (26).

5. Dispositif selon l'une quelconque des revendications 1 à 4, dans lequel, lors du fonctionnement, la première unité d'aspiration (104) produit un flux dirigé à travers l'espace de travail (22), et dans lequel une section transversale de flux horizontale (126) du flux dirigé couvre au moins 50 %, de préférence au moins 80 %, de la section transversale horizontale (128) de l'espace de travail (22).

6. Dispositif selon l'une quelconque des revendications 1 à 5, dans lequel le collet (136, 178) de la deuxième unité d'aspiration (106) est espacé de manière définie de la périphérie du corps de base (50) et couvre une section périphérique (166) d'au moins 120°, de préférence d'au moins 150°, de de manière davantage préférée d'au moins 180°, ou dans lequel le collet (136, 178) de la deuxième unité d'aspiration (106) entoure complètement la périphérie du corps de base (50).

7. Dispositif selon l'une quelconque des revendications 1 à 6, dans lequel le collet (136, 178) de la deuxième unité d'aspiration (106) est conçu et agencé de telle sorte que la deuxième unité d'aspiration (106) peut agir sur le corps de base (50) pour l'aspiration pendant l'application du matériau, la tête d'enduction (32) étant active.

8. Dispositif selon l'une quelconque des revendications 1 à 7, dans lequel le collet (136, 178) de la deuxième unité d'aspiration (106) est conçu et agencé de telle sorte que, lorsqu'un corps de base (50) tourne, une section qui a été revêtue par la tête de revêtement (32) entre dans une zone d'action (162) du collet (136, 178) après le revêtement, de préférence immédiatement après le revêtement de la section.

9. Dispositif selon l'une quelconque des revendications 1 à 8, dans lequel la deuxième unité d'aspiration (106) est activée lors du fonctionnement au moins lorsque la tête de revêtement (32) est active.

10. Dispositif selon l'une quelconque des revendications 1 à 9, dans lequel une troisième unité d'aspiration (108) est prévue pour une troisième des étapes d'aspiration, et dans lequel la troisième unité d'aspiration (108) est configurée pour aspirer, lors du fonctionnement, le matériau en excès d'un centre, notamment d'une zone de moyeu (54), du corps de base (50).

11. Dispositif selon la revendication 10, dans lequel la troisième unité d'aspiration (108) présente un entraînement (142) qui déplace la troisième unité d'aspiration (108) entre une position de travail et une position d'évitement (140), et/ou dans lequel la troisième unité d'aspiration (108) est reliée à une conduite d'aspiration (116).

12. Dispositif selon l'une quelconque des revendications 1 à 11, dans lequel le porte-pièce (26) comprend un axe de rotation pour le corps de base (50).

13. Dispositif selon l'une quelconque des revendications 1 à 12, présentant en outre une unité de retournement (254) pour le corps de base (50).

14. Dispositif selon l'une quelconque des revendications 1 à 13, présentant en outre une unité de filtration (174) pour séparer le matériau de revêtement en poudre du fluide aspiré.

15. Installation de production pour la fabrication de disques de frein, **caractérisée par** un dispositif (10) selon l'une quelconque des revendications 1 à 14, au moins un autre poste d'usinage (222), notamment un poste de tournage, un poste de perçage ou un poste de rectification, et un appareil de transfert (244) pour transférer les pièces entre les postes d'usinage (10, 222).
